# EUROPEAN PATENT SPECIFICATION

(11) **EP 1 028 237 B1**
(45) Date of publication and mention of the grant of the patent: **01.10.2003**
(21) Application number: 00200327.5
(22) Date of filing: 01.02.2000
(51) Int. Cl.: F02C 6/00, F02C 7/18, F02C 3/36, F02C 7/12

(54) **Gas turbine engine**
Gasturbinentriebwerk
Turbine à gaz

(30) Priority: 01.02.1999 GB 9902199
(43) Date of publication of application: 16.08.2000
(73) Proprietor: ABB Alstom Power UK Ltd., Lincoln LN2 5RY (GB)
(72) Inventor: Senior, Peter, Vlaams Brabant (BE)
(74) Representative: Dargavel, Laurence Peter

(56) References cited:
- DE-A- 4 008 698
- US-A- 5 207 053
- US-A- 5 724 806
- US-A- 5 934 064

## Description

### Technical field

The invention relates to gas turbine engines and in particular to the operation of gas turbines at high fuel to air ratio to increase efficiency, while reducing harmful emissions.

### Background of the invention

All gas turbine engines suffer from the problem of producing emissions such as nitrogen oxides (NOx) that are deemed harmful to the environment and legislation is continually changing to require stricter controls of such emissions. The most common way of solving this problem is to supply a lean pre-mixture of fuel and air to the combustor of the gas turbine, by which is meant an almost homogeneous mixture of fuel and air containing substantially more air than is required stoichiometrically for complete combustion of the fuel. Because this solution involves compressing approximately twice as much air as is theoretically required to release the chemical energy of the fuel, it reduces the efficiency of the engine and demands an increase in the size and cost of the compressor.

As a result of this efficiency penalty and high cost, there is a trend of reducing the amount of air flow through the turbine for a given amount of fuel. In prior art systems this leads to an increase in the operation temperature of the gas turbine. Higher temperature operation creates more harmful products and therefore reduces the capacity of the prior art systems to deliver low emissions by combustion of a lean fuel to air pre-mixture. Accordingly, there is a demand for a gas turbine arrangement that will operate efficiently at high fuel to air ratios, while delivering low levels of harmful emissions.

In systems which burn a lean pre-mixture of fuel and air, reducing the amount of air flow through the turbine for a given amount of fuel leads to an increase in the operation temperature due to a reduction in the heat dilution caused by the excess volume of air. This is not true of a rich pre-mixture, which contains an insufficient amount of air for complete combustion. In this case, an increase in the operation temperature of the gas turbine for a given amount of fuel is caused by increasing the amount of air flow through the turbine, and thus the amount of air available for combustion. The peak temperature is achieved by burning a stoichiometric or slightly lean pre-mixture of fuel and air, such that there is sufficient air for complete combustion but no heat dilution.

US-A-5743081 discloses a gas turbine that addresses the previously mentioned problems in an alternative manner. The gas turbine engine is provided with a plurality of compressors and turbines that are arranged in flow series, such that the final compressor in the series supplies an insufficient quantity of air to a combustor such that the average fuel to air ratio is rich. The fuel and air is burnt and the exhaust gases are used to drive the first of the plurality of turbines. The exhaust gases contain unburnt fuel but no surplus air. A number of combustion ducts are provided between adjacent turbines and are supplied with cooling air from the respective compressors via the cooling passages of the turbines. The unburnt fuel present in the combustor exhaust combines with cooling air in the first turbine and is burnt in the combustion ducts between the first and second turbines. The exhaust gases from the second combustion are used to drive the second turbine. This process is repeated to drive the subsequent turbines. Finally a power turbine, having no associated compressor, is arranged to receive the exhaust gases from the final combustion ducts and provides useful output power.

This arrangement provides greater efficiency at high fuel to air ratios than conventional lean burn engines but its design is unsuitable for large industrial scale applications. This is because the turbines must be short enough in the axial direction to avoid auto-ignition of the cooling air and exhaust gases before the mixture reaches the combustion ducts. Also because the time associated with this ignition, i.e. the auto-ignition time, is very short it does not allow sufficient time for proper mixing to take place. In addition, cooling air exits from turbine blades are designed specifically to inhibit mixing with the main flow through the turbine as this would reduce the cooling performance. Since proper mixing is required to produce low emissions it is therefore unlikely that this arrangement would satisfy the emission requirements demanded of industrial gas turbines.

The prior art also requires that the air supplied from the compressor to the turbines is used as cooling air and subsequently in the combustion process. As a result, a significant proportion of the supply of air from the compressor must be at the highest pressure available from the compressor. This represents a serious efficiency penalty.

A further problem with this prior art is the use of water, which is injected into the combustor to regulate the power of the engine as it achieves full load. The water, when added to a stoichiometric or rich mixture, has the potential to cause thermoacoustic problems, which in some cases may be severe enough to destroy the engine.

Another combustion apparatus for a gas turbine engine with the aim of achieving low NOx emissions is disclosed in patent application GB-A-2229733. A first combustor burns a rich mixture of fuel with a portion of the air supplied from a compressor. The combustion gas products are cooled by expansion through a turbine to a temperature below which ignition and thermal NOx products occur. The cooled gases are then pre-mixed with the remainder of the air supplied from the compressor and are burned in a lean mixture in a second combustor.

This prior art requires a very large temperature drop in the first turbine in order to avoid auto-ignition on introduction of air in the pre-mixer. If this temperature drop is practical at all in large scale applications, it will impose severe limitations on the design of the first turbine and on the pressures at which the respective combustors can operate.

Further, DE 4008698 discloses an apparatus and a method to hydrocarbon fuel burning processes for reducing NOₓ combustion products.

### Summary of the invention

The invention provides a gas turbine engine comprising:
a compressor for providing a source of compressed air;
a first combustor for burning a rich first mixture of fuel from a fuel source and air from the compressor to produce a first stage exhaust containing partially combusted fuel;
a first turbine driven by the first stage exhaust from the first combustor;
a second stage pre-mixing injector receiving the first stage exhaust from the first turbine and air from the compressor to form a second mixture;
a second combustor for burning the second mixture to produce a second stage exhaust; and
a second turbine driven by the second stage exhaust from the second combustor;
CHARACTERIZED BY further comprising:
a first stage pre-mixing injector receiving fuel from the fuel source and air from the compressor to form the rich first mixture for supply to the first combustor; and
a closed circuit supply of cooling air from the compressor to the first and second turbines.

With this arrangement the gas turbine engine operates at very high efficiency, while maintaining low emissions. The high efficiency is obtained because, by using rich combustion in the first combustor, the gas turbine overall uses a high proportion (17-18%) out of the 21% oxygen present in the intake air to extract energy from the fuel. This avoids the need to compress excessive quantities of air. A low level of emissions can be maintained by ensuring that combustion is fully completed in the second combustor and because rich combustion in the first combustor occurs at a lower temperature than lean combustion.

Preferably, the closed circuit cooling air is supplied directly from the compressor to the first turbine and directly from the compressor to the second turbine. Alternatively, cooling air may be supplied from the compressor to the first and second turbines successively with intercooling means provided between them. Because the cooling air is kept separate from the combustion air, it need not be at the highest pressure available from the compressor, thereby giving greater efficiency.

These advantages depend on the turbine engine being operated at very high pressures. It is preferred that the first combustor should operate at a pressure exceeding 40 bar. Because the exhaust from the engine is hotter than in the prior art, heat recovery should be more efficient.

In order to promote uniform combustion, the fuel and air are pre-mixed before injection into the first combustor. Pre-mixing makes possible a large reduction in harmful emissions, including NOx derived from fuel-bound nitrogen, which has not been achieved in lean combustion. The pre-mixing is carried out via pre-mixing injectors adapted for the increased fuel to air ratio and designed specifically to cope with a short auto-ignition time. The main design parameters of the pre-mixing injectors being the aerodynamics necessary to avoid separation zones in which fuel can gather whilst maintaining strong turbulent diffusion, for example by using swirl and jets in cross-flow, and the placement of fuel at multiple locations to reduce the local physical scale and hence the duration of the mixing process.

Preferably, the second combustor bums a slightly lean mixture of the first stage exhaust and air. This ensures that combustion of the fuel is fully completed in the second combustor. Although a slightly lean mixture is employed in the second combustor, the system is more efficient than in the prior art because partial combustion has already occurred in the first combustor, whereby a smaller quantity of compressed air is required, and the air can be supplied to the second combustor at substantially lower pressure than to the first combustor.

It is usual to express the combustion chemistry of the fuel and air in terms of an equivalence ratio. The equivalence ratio is commonly defined as the actual fuel/air ratio divided by the stoichiometric fuel/air ratio required for complete combustion. Rich burn extinction typically occurs at an equivalence ratio of 3, whilst an equivalence ratio of 1.2 is likely to be too hot for low emissions. The ideal value for rich combustion is therefore between 1.3 and 1.7. The ideal equivalence ratio for lean combustion is between 0.35 and 0.7.

The gas turbine engine according to the invention may have either a single-shaft configuration, in which the first and second turbines are both connected to the compressor via a single drive shaft, or preferably a twin-shaft configuration, in which the first turbine is connected via a drive shaft to the compressor and wherein the second turbine is connected to an output shaft separate from the drive shaft. The twin-shaft configuration simplifies the design of associated components and simplifies maintenance of the engine in use. It will be readily apparent that the respective turbines and compressors need not be coaxial if suitable mechanical couplings are provided.

The invention further provides a method of operating a gas turbine engine comprising:
mixing fuel from a fuel source and air from a compressor in a first pre-mixing injector to form a rich first pre-mixture;
burning the first pre-mixture in a first combustor to produce a first stage exhaust containing partially combusted fuel;
using the first stage exhaust to drive a first turbine;
mixing the first stage exhaust from the first turbine and air from the compressor in a second pre-mixing injector to form a second pre-mixture;
burning the second pre-mixture in a second combustor to produce a second stage exhaust;
using the second stage exhaust to drive a second turbine; and
supplying cooling air from the compressor to the first and second turbines in a closed cooling circuit.

Using this method, the output power of the engine may be controlled by varying the intake air flow to the engine as whole, by altering the compressor guide vanes in the case of the single-shaft configuration or in the case of the twin-shaft configuration by slowing down the first turbine shaft connected to the compressor. Alternatively the output power is controlled by varying the ratio of air supplied to the second combustor. At low engine power, the quantity of air supplied to the first combustor may make the mixture sufficiently lean to promote substantially complete combustion of the fuel in the first combustor, so that no further combustion occurs in the second combustor.

### The drawings

Figure 1 is a schematic diagram of a gas turbine engine in accordance with a first embodiment of the present invention.
Figure 2 is a schematic diagram of a gas turbine engine in accordance with a second embodiment of the present invention.

### Description of preferred embodiments

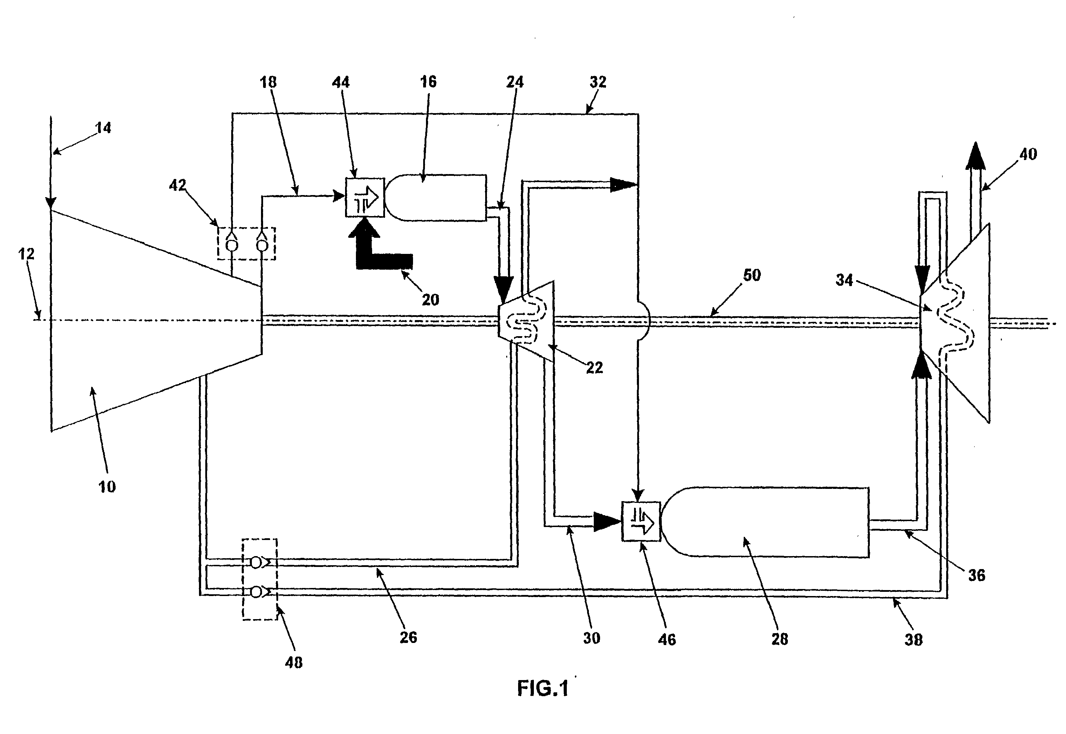

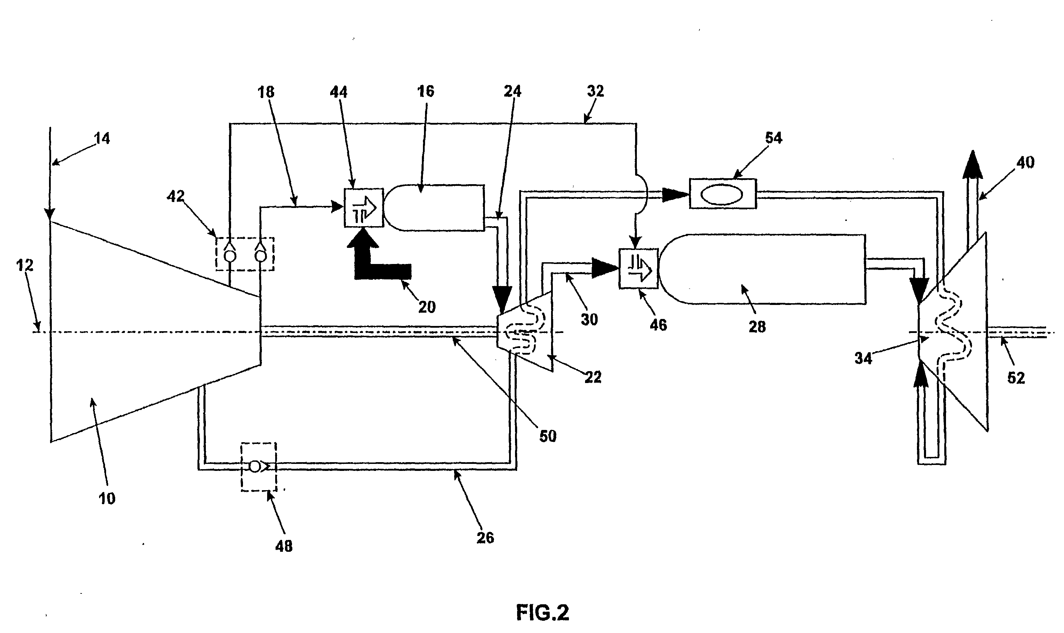

In Figure 1 and Figure 2, the flow of combustion air is illustrated by arrows having single thin lines, the flow of fuel by arrows having single thick lines, the flow of cooling air by narrow double lines and the flow of exhaust by arrows having wide double lines.

As illustrated in Figure 1, a compressor 10 mounted for rotation about an axis 12 receives an input of air shown by arrow 14 and provides an output of pressurised air. A proportion of the output air from the compressor is supplied to a first pre-mixing injector 44, as indicated by arrow 18. The first pre-mixing injector 44 also receives a supply of fuel, as shown by arrow 20, which may be in a liquid or gas phase. The air and fuel are pre-mixed in a rich mixture, i.e. one containing a high proportion of fuel to air, and are injected into the first combustor 16. In the first combustor 16, combustion occurs at high pressure, for example 60 bar. However, only partial combustion of the fuel occurs owing to the richness of the mixture and therefore the exhaust gases from the first combustor 16 contain a proportion of unburnt fuel.

The high pressure exhaust gases from the first combustor 16 are supplied to a first turbine 22, as shown by arrow 24, to drive rotation of the turbine about the axis 12. The first turbine 22 drives the compressor 10 via a drive shaft 50 along the axis 12 in a conventional manner. The first turbine 22 also receives a supply of cooling air directly from the compressor 10, as shown by arrow 26, which is kept separate from the exhaust gases 24 whilst within the turbine. For this reason the supply of cooling air 26 from the compressor 10 to the first turbine 22 need not be at the highest pressure available from the compressor. After cooling the first turbine 22, the cooling air is fed into the air supply to the second pre-mixing injector, as shown by arrow 32.

The exhaust gases from the first turbine 22 are led into a second pre-mixing injector 46 as shown by arrow 30. The second pre-mixing injector 46 also receives a supply of air from the compressor 10, as shown by arrow 32. The amount of air supplied to the second mixing injector 46 is at least sufficient for combustion of the previously unburnt fuel so the fuel and air mixture is slightly lean. The second pre-mixing injector 46 does not require any independent supply of fuel. The exhaust gases and air are pre-mixed and injected into the second combustor 28. It should be noted that the exhaust from the first combustor is gaseous, whether the original fuel is a liquid or a gas. Therefore, the second combustor does not need different pre-mixing injectors dependent on the type of fuel.

Combustion of the previously unburnt fuel is completed in the second combustor 28 to produce exhaust gases containing low concentrations of harmful emissions. Combustion in the second combustor 28 occurs at a much lower pressure than in the first combustor 16, for example a pressure of 10 bar. For this reason, the supply of air 32 from the compressor 10 to the pre-mixing injector 46 need not be at the highest pressure available from the compressor.

The exhaust gases from the second combustor 28 are supplied to a second turbine 34, as shown by arrow 36, to drive rotation of the turbine. Owing to complete burning of the fuel in two stages, respectively in the first and second combustors 16,28, the exhaust gases emitted from the second turbine 34, shown by arrow 40, are low in harmful emissions. The second turbine 34 also receives a supply of cooling air directly from the compressor 10, as shown by arrow 38. After cooling the second turbine 34, the cooling air is preferably fed into the airstream of the second turbine but may be fed into the air supply to the second pre-mixing injector, as shown by arrow 32, for full use of the air.

The mode of operation of the engine described above applies when it is running at more than about 45% of full power. In this mode at full power, the preferred distribution of air from the compressor is the following:

| | | |
|---|---|---|
| Air supply to first pre-mixing injector | (arrow 18) | 48% |
| Cooling air to first turbine | (arrow 26) | 10% |
| Air supply to second pre-mixing injector | (arrow 32) | 24% |
| Cooling air to second turbine | (arrow 38) | 18% |

When it is desired to run the engine at low power, from start-up to about 45% of full power, some of the air from the compressor 10 may be diverted from the second pre-mixing injector supply 32 to the first pre-mixing injector supply 18 by a valve regulator 42. In this mode of operation, the fuel/air mixture in the first combustor 16 becomes lean and combustion of fuel is substantially completed in the first combustor 16. Harmful emissions are low, just as in the single-stage, lean combustion arrangements known in the prior art. Now that there is substantially no unburnt fuel remaining for combustion in the second combustor 28, the combustor chamber acts simply as a mixing duct for dilution of the exhaust gases with air from the compressor. In the low power mode of operation, a preferred distribution of air from the compressor might be the following:

| | | |
|---|---|---|
| Air supply to first pre-mixing injector | (arrow 18) | 60% |
| Cooling air to first turbine | (arrow 26) | 10% |
| Air supply to second pre-mixing injector | (arrow 32) | 12% |
| Cooling air to second turbine | (arrow 38) | 18% |

An alternative closed circuit cooling system is illustrated in Figure 2, wherein the first turbine 22 receives a supply of cooling air directly from the compressor 10, as shown by arrow 26, which is kept separate from the exhaust gases whilst within the turbine. After cooling the first turbine 22, the cooling air is passed through an intercooler 54 and supplied directly to the second turbine 34. After cooling the second turbine 34, the cooling air is preferably fed into the airstream of the second turbine but may be fed into the air supply to the second pre-mixing injector, as shown by arrow 32, for full use of the air.

As illustrated in Figure 1, the first and second turbines 22,34 are coaxial. In this single-shaft configuration they are connected via a common drive shaft 50 to the compressor 10. The same drive shaft 50 also provides the output of the gas turbine engine. An alternative twin-shaft configuration is illustrated in Figure 2, wherein the first turbine 22 is connected to a first shaft 50 to drive the compressor 10 as previously described, while the second turbine 34 is mounted on a second shaft 52 to provide the output of the gas turbine engine. In the twin-shaft configuration, the power output by the first turbine 22 must exactly match that required by the compressor 10.

Whilst Figure 2 illustrates both an alternative closed circuit cooling supply and an alternative twin-shaft configuration, it should be readily understood that each of the respective alternatives are freely interchangeable with the gas turbine engine illustrated in Figure 1.

## Claims

1. A gas turbine engine comprising:
a compressor (10) for providing a source of compressed air;
a first combustor (16) for burning a rich first mixture of fuel (20) from a fuel source and air (18) from the compressor (10) to produce a first stage exhaust (24) containing partially combusted fuel;
a first turbine (22) driven by the first stage exhaust (24) from the first combustor (16);
a second stage pre-mixing injector (46) receiving the first stage exhaust (30) from the first turbine (22) and air (32) from the compressor (10) to form a second mixture;
a second combustor (28) for burning the second mixture to produce a second stage exhaust (36); and
a second turbine (34) driven by the second stage exhaust (36) from the second combustor (28);
**CHARACTERIZED BY** further comprising:
a first stage pre-mixing injector (44) receiving fuel (20) from the fuel source and air (18) from the compressor (10) to form the rich first mixture for supply to the first combustor (16); and
a closed circuit supply (26,38) of cooling air from the compressor (10) to the first and second turbines (22,34).

2. A gas turbine engine according to claim 1, wherein the first combustor (16) burns a rich mixture of fuel (20) and air (18) with an equivalence ratio between 1.3 and 1.7.

3. A gas turbine engine according to claim 1 or claim 2, wherein the second combustor (28) burns a lean mixture of the first stage exhaust (30) and air (32).

4. A gas turbine engine according to any preceding claim, wherein the second combustor (28) burns a lean mixture of the first stage exhaust (30) and air (32) with an equivalence ratio between 0.35 and 0.7.

5. A gas turbine engine according to any of claims 1 to 4, wherein the closed circuit supply of cooling air comprises an air supply (26) direct from the compressor (10) to the first turbine (22) and an air supply (38) direct from the compressor (10) to the second turbine (34).

6. A gas turbine engine according to any of claims 1 to 4, wherein the closed circuit supply of cooling air comprises an air supply (26) direct from the compressor (10) to the first turbine (22) and then from the first turbine (22) via an intercooling means (54) to the second turbine (34).

7. A gas turbine engine according to any preceding claim, comprising means for varying the ratio between the quantity of air supplied to the first combustor (16) and the quantity of air supplied to the second combustor (28).

8. A method of operating a gas turbine engine comprising:
mixing fuel (20) from a fuel source and air (18) from a compressor (10) in a first pre-mixing injector (44) to form a rich first pre-mixture;
burning the first pre-mixture in a first combustor (16) to produce a first stage exhaust (24) containing partially combusted fuel;
using the first stage exhaust (24) to drive a first turbine (22);
mixing the first stage exhaust (24) from the first turbine (22) and air (32) from the compressor (10) in a second pre-mixing injector (46) to form a second pre-mixture;
burning the second pre-mixture in a second combustor (28) to produce a second stage exhaust (36);
using the second stage exhaust (36) to drive a second turbine (34); and
supplying cooling air from the compressor (10) to the first and second turbines (22,34) in a closed cooling circuit (26,38).

9. A method of operating a gas turbine engine according to claim 8, wherein the first combustor (16) operates at a pressure greater than 40 bar.

10. A method of operating a gas turbine engine according to claim 8, wherein the output power of the engine is controlled by varying the ratio between the quantity of air supplied to the first combustor (16) and the quantity of air supplied to the second combustor (22).

## Patentansprüche

1. Gasturbinen-Triebwerk, enthaltend
einen Luftverdichter (10) zur Lieferung von Druckluft; eine erste Verbrennungseinrichtung (16) zum Verbrennen eines ersten fetten Brennstoffgemisches (20) aus einer Brennstoffquelle und Luft (18) vom Luftverdichter (10) unter Herstellung eines Ausströmgases (24) der ersten Stufe, welches teilweise verbrannten Brennstoff enthält; eine erste Turbine (22), die von dem Ausströmgas (24) der ersten Stufe aus der ersten Verbrennungseinrichtung (16) angetrieben wird;
einen Vor-Einspritzer (46) der zweiten Stufe, welcher das Ausströmgas (24) der ersten Stufe aus der ersten Turbine (22) und Luft (32) aus dem Luftverdichter (10) unter Ausbildung eines zweiten Gemisches aufnimmt;
eine zweite Verbrennungseinrichtung (28) zum Verbrennen des zweiten Gemisches unter Herstellung eines Abströmgases (36) der zweiten Stufe; und
eine zweite Turbine (34), welche durch das Ausströmgas (36) der zweiten Stufe aus der zweiten Verbrennungseinrichtung (28) angetrieben wird;
**dadurch gekennzeichnet, daß**
es außerdem enthält:
einen Vormisch-Einspritzer (44) der ersten Stufe, welcher Brennstoff (20) aus der Brennstoffquelle und Luft (18) aus dem Luftverdichter (10) unter Bildung des ersten, fetten Gemisches zur Versorgung der ersten Verbrennungseinrichtung (16) aufnimmt; und
eine Kühlluftversorgung in einem geschlossenen Kreislauf (26,38) aus dem Luftverdichter (10) für die erste und zweite Turbine (22,34).

2. Gasturbinen-Triebwerk gemäß Anspruch 1, wobei die erste Verbrennungseinrichtung (16) ein fettes Gemisch aus Treibstoff (20) und Luft (18) mit einem Äquivalenzverhältnis von zwischen 1,3 und 1,7 verbrennt.

3. Gasturbinen-Triebwerk gemäß Anspruch 1 oder 2, wobei die zweite Verbrennungseinrichtung 28 ein mageres Gemisch aus dem Ausströmgas (24) der ersten Stufe und Luft (32) verbrennt.

4. Gasturbinen-Triebwerk gemäß einem der vorhergehenden Ansprüche, wobei die zweite Verbrennungseinrichtung (28) ein mageres Gemisch aus dem Ausströmgas (24) der ersten Stufe und Luft (32) mit einem Äquivalenzverhältnis von zwischen 0,35 und 0,7 verbrennt.

5. Gasturbinen-Triebwerk gemäß einem der Ansprüche 1 bis 4, wobei die Versorgung von Kühlluft in geschlossenem Kreislauf eine Luftversorgung (26) der ersten Turbine (22) unmittelbar von dem Luftverdichter (10) und eine Luftversorgung (38) der zweiten Turbine (34) unmittelbar vom Luftverdichter (10) umfaßt.

6. Gasturbinen-Triebwerk gemäß einem der Ansprüche 1 bis 4, wobei die Kühlluftversorgung in geschlossenem Kreislauf eine Luftversorgung (26) der ersten Turbine (22) unmittelbar vom Luftverdichter (10) und anschließend der zweiten Turbine (34) aus der ersten Turbine (22) über ein Zwischenkühlmittel (54) umfaßt.

7. Gasturbinen-Triebwerk gemäß einem der vorhergehenden Ansprüche, umfassend Mittel zum Variieren des Verhältnisses zwischen der Menge an der ersten Verbrennungseinrichtung (16) zugeführter Luft und der Menge an der zweiten Verbrennungseinrichtung (28) zugeführter Luft.

8. Verfahren zum Betreiben eines Gasturbinen-Triebwerks, umfassend
das Vermischen von Brennstoff (20) aus einer Brennstoffquelle und Luft (18) aus einem Luftverdichter (10) in einem ersten Vormisch-Einspritzer (44) unter Ausbildung eines fetten ersten Vorgemisches;
Verbrennen des ersten Vorgemisches in einer ersten Verbrennungseinrichtung (16) unter Herstellung eines Ausströmgases (24) der ersten Stufe, welches teilweise verbrannten Brennstoff enthält;
Verwendung des Ausströmgases (24) der ersten Stufe zum Antreiben einer ersten Turbine (22),
Vermischen des Ausströmgases (24) der ersten Stufe aus der ersten Turbine (22) und Luft (32) vom Luftverdichter (10) in einem zweiten Vormisch-Einspritzer (46) unter Ausbildung eines zweiten Vorgemisches;
Verbrennen des zweiten Vorgemisches in einer zweiten Verbrennungseinrichtung (28) unter Erzeugung eines Ausströmgases (36) der zweiten Stufe;
Verwendung des Ausströmgases (36) der zweiten Stufe zum Antreiben einer zweiten Turbine (34) und
Lieferung von Kühlluft aus dem Luftverdichter (10) zu der ersten und der zweiten Turbine (22,34) in einem geschlossenen Kühlkreislauf (26,38).

9. Verfahren zum Betreiben eines Gasturbinen-Triebwerkes gemäß Anspruch 8, wobei die erste Verbrennungseinrichtung (16) bei einem Druck von über 40 bar arbeitet.

10. Verfahren zum Betreiben eines Gasturbinen-Triebwerks gemäß Anspruch 8, wobei die Ausgangsleistung des Triebwerks dadurch gesteuert wird, daß man das Verhältnis zwischen der der ersten Verbrennungseinrichtung (16) zugeführten Luftmenge und der der zweiten Verbrennungseinrichtung (28) zugeführten Luftmenge variiert.

## Revendications

1. Turbine à gaz comprenant :
un compresseur (10) pour proposer une source d'air comprimé ;
une première chambre de combustion (16) pour brûler un premier mélange de carburant riche (20) provenant d'une source de carburant et de l'air (18) provenant du compresseur (10) pour produire un premier échappement étagé (24) contenant du carburant partiellement brûlé ;
une première turbine (22) entraînée par le premier échappement étagé (24) provenant de la première chambre de combustion (16) ;
un second injecteur étagé de pré-mélange (46) qui reçoit le premier échappement étagé (30) de la première turbine (22) et l'air (32) du compresseur (10) pour former un second mélange ;
une seconde chambre de combustion (28) pour brûler le second mélange pour produire un second échappement étagé (36) ; et
une seconde turbine (34) entraînée par le second échappement étagé (36) provenant de la seconde chambre de combustion (28) ;
**caractérisé en ce qu'**elle comprend en outre :
un premier injecteur de pré-mélange étagé (44) qui reçoit le carburant (20) provenant de la source de carburant et l'air (18) provenant du compresseur (10) pour former le premier mélange riche pour alimenter la première chambre de combustion (16) ; et
une alimentation en circuit fermé (26, 38) d'air de refroidissement provenant du compresseur (10) vers les première et seconde turbines (22, 34).

2. Turbine à gaz selon la revendication 1, dans laquelle la première chambre de combustion (16) brûle un mélange de carburant riche (20) et de l'air (18) avec un rapport d'équivalence compris entre 1,3 et 1,7.

3. Turbine à gaz selon la revendication 1 ou la revendication 2, dans laquelle la seconde chambre de combustion (28) brûle un mélange pauvre du premier échappement étagé (30) et d'air (32).

4. Turbine à gaz selon l'une quelconque des revendications précédentes, dans laquelle la seconde chambre de combustion (28) brûle un mélange pauvre du premier échappement étagé (30) et d'air (32) avec un rapport d'équivalence compris entre 0,35 et 0,7.

5. Turbine à gaz selon l'une quelconque des revendications 1 à 4, dans laquelle l'alimentation en circuit fermé de l'air de refroidissement comprend une alimentation d'air (26) directe depuis le compresseur (10) vers la première turbine (22) et une alimentation d'air (38) directe du compresseur (10) vers la seconde turbine (34).

6. Turbine à gaz selon l'une quelconque des revendications 1 à 4, dans laquelle l'alimentation en circuit fermé de l'air de refroidissement comprend une alimentation d'air (26) directe du compresseur (10) vers la première turbine (22) et ensuite de la première turbine (22) via des moyens de refroidissement intermédiaire (54) vers la second turbine (34).

7. Turbine à gaz selon l'une quelconque des revendications précédentes, comprenant des moyens pour modifier le rapport entre la quantité d'air alimentée à la première chambre de combustion (16) et la quantité d'air alimentée à la seconde chambre de combustion (28).

8. Procédé de fonctionnement d'une turbine à gaz comprenant les étapes consistant à :
mélanger le carburant (20) provenant d'une source de carburant et l'air (18) provenant d'un compresseur (10) dans un premier injecteur de pré-mélange (44) pour former un premier pré-mélange riche;
brûler le premier pré-mélange dans une première chambre de combustion (16) pour produire un premier échappement étagé (24) contenant du carburant partiellement brûlé ;
utiliser le premier échappement étagé (24) pour entraîner une première turbine (22) ;
mélanger le premier échappement étagé (24) provenant de la première turbine (22) et l'air (32) provenant du compresseur (10) dans un second injecteur de pré-mélange (46) pour former un second pré-mélange ;
brûler le second pré-mélange dans une seconde chambre de combustion (28) pour produire un second échappement étagé (36) ;
utiliser le second échappement étagé (36) pour entraîner une seconde turbine (34) ; et
fournir l'air de refroidissement du compresseur (10) aux première et seconde turbines (22, 34) dans un circuit de refroidissement fermé (26, 38).

9. Procédé de fonctionnement d'une turbine à gaz selon la revendication 8, dans lequel la première chambre de combustion (16) fonctionne à une pression supérieure à 40 bars.

10. Procédé de fonctionnement d'une turbine à gaz selon la revendication 8, dans lequel la puissance de sortie du moteur est commandée en modifiant le rapport entre la quantité d'air fournie à la première chambre de combustion (16) et la quantité d'air fournie à la seconde chambre de combustion (22).
